# EUROPEAN PATENT SPECIFICATION

(11) **EP 4 474 158 B1**
(45) Date of publication and mention of the grant of the patent: **29.04.2026**
(21) Application number: 24020179.8
(22) Date of filing: 03.06.2024
(51) Int. Cl.: B41J 2/475, B41M 5/26, C03C 23/00, B41J 2/44, B60R 13/10

(54) **DEVICE FOR MARKING A TRANSPARENT ELEMENT OF A VEHICLE, AND RELATED PROCESS**
VORRICHTUNG ZUM MARKIEREN EINES TRANSPARENTEN ELEMENTES EINES FAHRZEUGES, UND VERFAHREN
APPAREIL POUR MARQUER UN ÉLÉMENT TRANSPARENT D'UN VÉHICULE, ET PROCÉDÉ

(30) Priority: 05.06.2023 IT 202300011352
(43) Date of publication of application: 11.12.2024
(73) Proprietor: Next Automotive Solution S.r.l., 23900 Lecco (LC) (IT)
(72) Inventor: Rocchi, Federica, 23900 LECCO (LC) (IT)
(74) Representative: Mola, Edoardo

(56) References cited:
- CN-A- 105 033 463
- US-A1- 2008 304 525
- US-B2- 6 815 637

## Description

The present invention relates in general to the personalization of vehicle elements by the impression thereon of a sign or a security code, in order to discourage theft of the vehicle or its components.

More particularly, the invention relates to a marking process, by means of which it is possible to impart an indelible and therefore permanent code on any transparent element of a vehicle, irrespective of the material which constitutes it.

From document CN 105 033 463 A it is known a device for marking a transparent element of a vehicle, which comprises an emission head for emitting an infrared ray laser beam of the YAG-aWave type, and an electronic control unit operatively connected to the laser emission head to control the emission of said laser beam in order to mark said transparent element. The same document describes also a process for marking a transparent element of a vehicle carried out by means of the marking device mentioned above, which comprises the step of placing the vehicle in a prepared preparation area, of positioning the laser emission head in contact with a preselected marking region of said transparent element, and of carrying out the marking operation by delivering a laser beam from the laser emission head towards said transparent element.

The object of the invention is therefore to propose a marking process which is able of impressing in a highly effective manner a personalization code on a transparent element of a vehicle.

This object is achieved by the invention by virtue of a marking process of the type defined in the appended claims.

More specifically, according to the invention, the marking process comprises the steps of:
- cleaning the outer surface of the element to be marked;
- carrying out an authentication procedure of the operator through instructions displayed on the electronic control unit and starting the electronic control unit to select on it the type of element to be marked, with the purpose of automatically activating a software in the laser emission head for adjusting the wave length, the intensity and the number of passes of the laser beam for the type of selected element;
- carrying out the marking operation by delivering a laser beam from the laser emission head towards said transparent element keeping the position of the laser emission head fixed with respect to the element to be marked; and
- waiting for the automatic interruption of the laser beam delivery at the end of the marking operation.

By virtue of its characteristics, the marking process is capable of carrying out a physical transformation of the surface of the element to be marked, by the emission of an infrared laser beam of the YAG-aWave type which penetrates into the material of the component to a depth such as to prevent its mechanical and/or chemical erasure.

In particular, the use of an infrared laser of the above type allows to obtain a sharpness and a resolution of the code line at photographic level, leaving the surface of the component completely intact and smooth, at least in the case of marking of a polycarbonate component. Moreover, this type of laser has the advantage of not reacting in contact with organic tissues, so that in the case of accidental delivery of the laser to an operator, there is no risk for the latter.

According to a preferred feature of the invention, the process comprises the step of supporting the laser emission head by a support at least during the execution of a marking of said transparent element.

This feature makes the process of the invention safer and more effective in the carrying out thereof.

According to another preferred feature of the invention, said support consists of a base body which can be stationary or consist of a base body movable on wheels.

This makes the process easy and practical to be carried out.

According to yet another preferred feature of the invention, the process comprises the step to provide the base body with an articulated arm, which articulated arm comprises a first portion and a second portion mutually articulated at a first articulation, said first portion of the arm being articulated to the base body at a second articulation and said second portion of the arm being articulated to the laser emission head at a third articulation, each of said articulations being associated with respective adjustable locking means preferably comprising a clamping knob or the like.

According to a further preferred feature of the invention, the base body comprises two pairs of wheels, a first pair of wheels rotating with respect to a common axis of rotation and provided with braking means, and a second pair of independent casters.

In this manner, the base body is easily maneuverable and lockable in a stable position for the marking process, without allowing inadvertent movements or vibrations.

According to yet another preferred feature of the invention, the laser emission head delivers a laser beam substantially only in the horizontal and downward direction.

In this manner it is possible to avoid the emission of the laser beam toward the head of an operator, for greater safety.

According to yet another preferred feature of the invention, the process comprises the steps of preparing anchoring means for the electronic control unit on said base body and to fix the electronic control unit on the base body by said anchoring means.

In this manner the base body and the control unit together form a single body, for greater convenience.

Furthermore, the process of the invention comprises the steps of connecting the electronic control unit remotely to a data-base containing a storage of the marking operations previously carried out and the codes usable for future marking operations, of equipping the laser emission head with a software for managing its operation, and of providing said electronic control unit with a resident software for communication via LAN with the software for managing the operation of the laser emission head.

This enables the marking operation by the laser emission head to be easily and quickly managed through said electronic control unit.

According to a further preferred feature of the process of the invention, when the laser emission head is supported by a base body, it preferably comprises the steps of:
- arranging the base body of the marking device in the vicinity of the transparent element of the vehicle to be marked;
- adjusting the position of the articulated arm and locking the position of the articulated arm by means of said adjustable locking means associated with the articulations of said arm.

According to another preferred feature of the process of the invention, at the end of the marking operation the electronic control unit asks the operator to position the laser emission head at another element of the vehicle to be marked.

This facilitates the operation of marking a series of transparent elements of the same vehicle.

According to yet another preferred feature of the process of the invention, the electronic control unit comprises a list of a plurality of transparent elements to be marked and, for each of them, an indication of a wavelength, of an intensity and of a number of laser beam passes to control the operation of the laser emission head during the marking operation.

By virtue of these features, the process of the invention can be carried out in a totally automatic manner once the element of the vehicle to be marked has been determined.

According to a further preferred feature of the process of the invention, when the transparent element to be marked is a polycarbonate element such as a front or rear headlight unit of the vehicle or the transparent portion of a motorcycle cowl, the laser emission head is arranged at the surface of said transparent element to be marked outside the vehicle, and the marking, starting from the outer contact surface, extends for a depth of about 4/5 of the thickness of said polycarbonate element, without material removal.

According to yet another preferred feature of the process of the invention, when the transparent element to be marked is a glass panel of the vehicle, such as a windscreen, a rear window or a side window of the vehicle, the laser emission head is arranged at the surface of said element to be marked located outside the vehicle, a screen of reflecting material for said laser beam being arranged in contact with the inner surface of the glass panel and the marking from the inner contact surface of the reflective material shield extends for a depth of about 2 tenths of a millimeter starting from the inner surface of said glass panel, with removal of material.

Further characteristics and advantages of the invention will become clearer from the following detailed description, given by way of non-limiting example and referring to the attached drawings which show a preferred embodiment thereof, in which:
Figure 1 is a schematic front view of a base body of a device for carrying out the process of the invention equipped with an emission head of an infrared laser beam of the YAG-aWave type,
Figure 2 is a schematic view showing the device for carrying out the process of the invention during the marking of the optical unit of a front headlight of a motor vehicle,
Figure 3 is a schematic sectional view of a detail of the marking obtained for a polycarbonate element of the vehicle,
Figure 4 is a schematic view showing the device for carrying out the process of the invention during the marking of a glass panel of a motor vehicle, and
Figure 5 is a schematic sectional view of a detail of the marking obtained for a glass element of the vehicle.

With reference to the figures, a device for marking a transparent element of a vehicle, according to a preferred embodiment for carrying out the process of the invention, is indicated 10 as a whole.

The device 10 comprises a movable base body 12, preferably formed by a sturdy structure of bent sheet metal and supported by two pairs of front 14 and rear 16 wheels, the pair of front wheels 14 of which is generally of the swivel or pivoting type while the pair of rear wheels 16 is rotatably mounted with respect to its own axis of rotation and is provided with braking means (not shown since it is of a per se known type).

An articulated arm 18 extends on one side of the base body 12, which comprises a first and a second rod 20, 22 mutually articulated at 24, one end of the first rod 20 being articulated to the base body 12 and a free end of the second rod 22 being articulated to a head 26 for emitting a YAG-aWave type infrared laser beam. The various articulations of the arm 18, that is the articulation of the rod 20 to the body 12, the articulation of the rod 22 to the laser emission head 26 and the articulation 24 interposed between the rods 20 and 22, are associated with relative adjustable locking means (not shown in the figures), which preferably comprise for each articulation a knob or a clamping nut or the like.

The laser emission head can be preferably positioned only in a series of positions in which the laser beam emitted therefrom does not constitute a potential danger for the operator or for the structures placed in proximity to the device 10, for example in order to deliver a laser beam substantially only in the horizontal direction with the possibility of small angular adjustments of the position for a better adaptation to the profile of an element to be marked, and downwards, in order to avoid the delivery of the laser beam upwards, so as not to be able to interfere with the operator's head.

Since the laser emitting head 26 is positioned in a decentralized position with respect to the body 12, the structure of the base body 12 is provided with counterweight means (not shown) for balancing the weight of the head 26 which is about 7 kg, which counterweight means preferably consist of cast iron blocks welded to the floor of the body 12.

The top of the body 12 has a shelf 28 arranged to receive an electronic control unit 30 which conveniently consists of a portable PC which can be fixed on the shelf 28 by means of anchoring means (not shown). The unit 30 is connected via LAN to the laser emission head 26 to interface through a communication software with a control software already resident in the latter, in order to control the functionality of the head 26, in particular its laser marking function, by means of the unit 30.

Furthermore, the control unit 30 is connected remotely to a data base containing a storage of the marking operations previously carried out by the device 10 and also the codes usable for future marking operations.

The control software resident in the head 26 prevents the end user from modifying the basic settings of the control unit 30 and can operate according to a simplified procedure in which all the machine adjustment parameters are preset and not modifiable, so that the operator only has to communicate to the head 26 by means of the communication software which element must be marked and, according to the choice, the head 26 operates with the optimal parameters preset for the selected element.

In particular, the control unit 30 allows to display a list of elements to be marked of various vehicles, and for each of them contains the indication of a wavelength, an intensity of the laser beam and a number of laser beam delivery passes, with the purpose to use the related data to automatically control the operation of the head 26 during a marking operation.

The device 10 is used to perform a process of marking a transparent element of a vehicle by reproducing a code by the infrared laser beam delivered from the head 26. For example, the polycarbonate cover lens of an optical unit of a front headlight or a rear lamp of a vehicle, or the transparent polycarbonate portion of a motorcycle cowl, or the tempered or laminated glass panel of a windshield, of a rear window or a side window of a motor vehicle.

The laser beam, regardless of the material of the transparent element to be marked, acts on a surface thereof, transforming it as a result of its penetration into the material to reproduce the marking code to such a depth as to prevent its mechanical and/or chemical erasure, so as to produce an indelible marking.

In particular, the use of an infrared laser beam of the YAG-aWave type allows to obtain a sharpness and a resolution of the marking at photographic level, leaving the outer surface of the transparent element with respect to the relative vehicle completely intact and smooth. Moreover, this type of laser does not react in contact with organic tissues, so that it does not entail a danger in the case of the accidental projection of the laser beam onto the operator's body.

In the operation of the device 10, the main steps described below are carried out with reference to the marking of a transparent element of a motor vehicle indicated with C in the drawings.

Initially, the motor vehicle C is positioned in a specially designed preparation area, where a cleaning of the outer surface of the marking element is carried out which, by way of example, can be a front optical unit 34 or a side window 36, by means of specific cleaning products provided with the device 10 (not shown) and for example contained in a compartment of the base body 12.

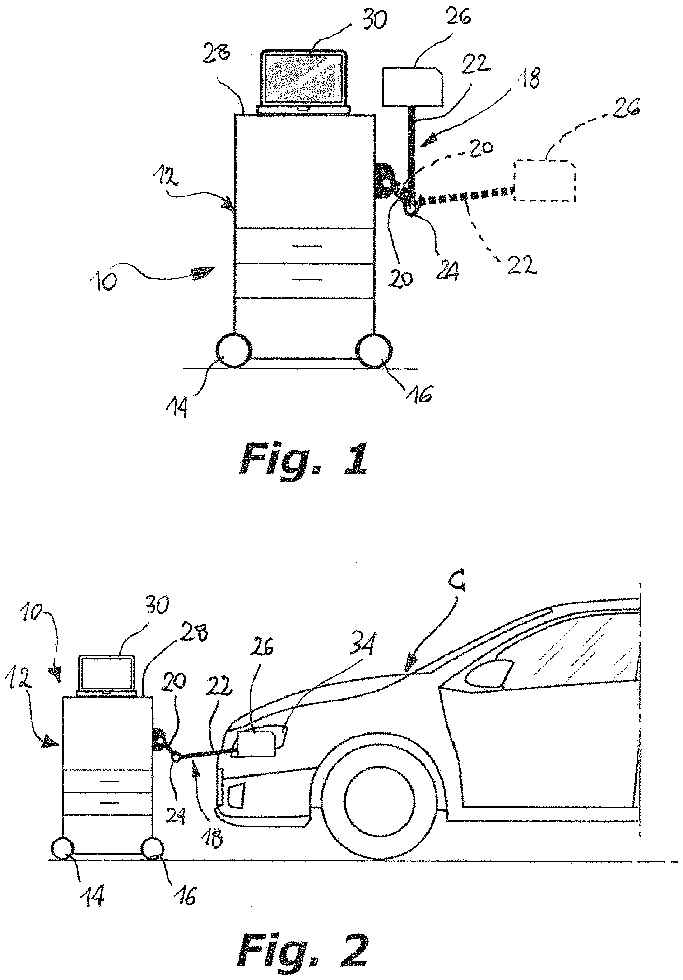

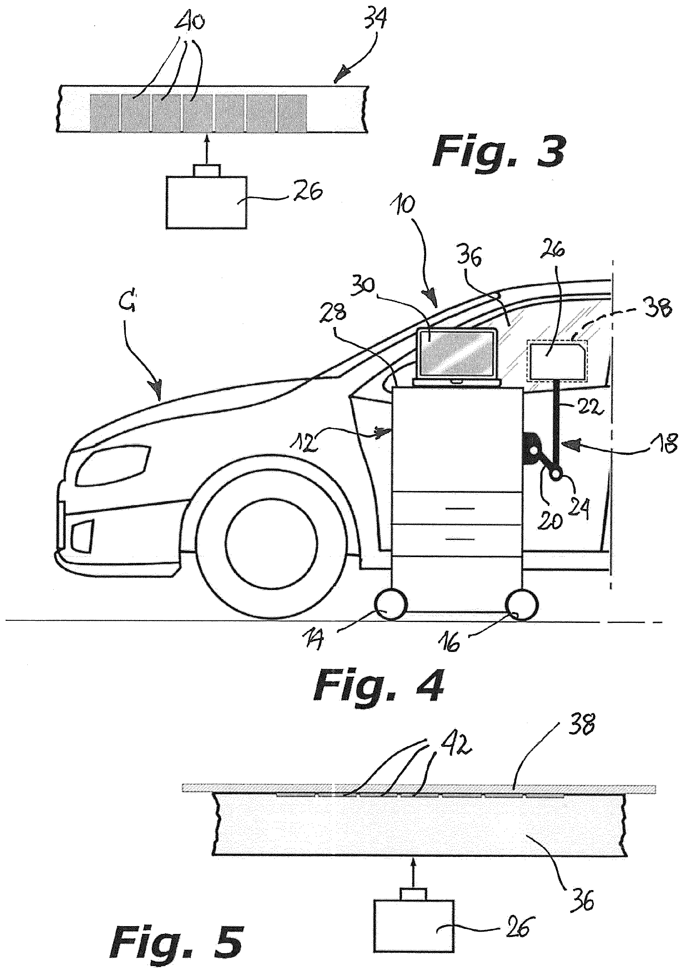

With reference to Figures 2 and 3, the marking may be carried out on the front optical unit 34 which has a transparent polycarbonate outer cover lens of optical quality.

After the cleaning step, the base body 12 is arranged in proximity to the optical unit 34 and the head 26 is brought into contact with a region of the assembly 34 as a result of the adjustment of the position of the rods 20 and 22 of the articulated arm 18 and the locking in position of the rods 20 and 22 as well as the head 26, by means of the adjustable locking means associated with the relative articulations.

The operator performs a procedure for its own authentication by means of instructions displayed on the electronic control unit 30, which comprises at least one or more of the following operations:
- declaring an own identifier, such as the name or an identification code,
- declaring an own authorization code,
- signing a release of its own responsibility,
- signing a declaration of diligent use and of compliance with the safety standards, and/or
- confirming that the transparent element to be marked corresponds to the chosen element, in this case a front optical unit 34 of the vehicle.

The electronic control unit 30 is then started to select in a storage listing the possible elements to be marked the type of element selected for marking, in this case a front optical unit 34, so as to automatically activate in the head 26 a software which performs a step of adjusting the wavelength of the laser beam, its intensity and the number of passages required for the marking, specific for the type of the selected element.

The marking operation is then started by delivering a laser beam by means of the laser emission head 26 toward the front optical unit 34, maintaining the position of the head 26 fixed with respect to the optical unit 34.

At the end of the marking operation, which occurs for the automatic interruption of the laser beam delivery when the marking code has been completed, in the case of transparent elements to be marked arranged on both sides of the vehicle, it is possible that the electronic control unit 30 issues a message in which it is proposed or required to proceed with the marking of a symmetrical transparent element located on the other side of the vehicle, so that a further marking operation takes place after positioning the laser emission head 26 at the other symmetrical element of the vehicle to be marked, in this case, the front optical unit located on the other side of the same motor vehicle C.

A similar process is carried out, for example, for marking the rear lamps of the motor vehicle C and for other possible polycarbonate elements, as well as for marking the transparent polycarbonate portion of a motorcycle cowl (not shown), with possible small variations within the reach of the person skilled in the art.

The marking thus carried out preferably consists of a seven-character alphanumeric code whose impressions 40 extend from the outer surface of contact with the laser emission head 26 for a depth of about 4/5 of the thickness of the polycarbonate element, without material removal.

With reference to Figures 4 and 5, the marking can be carried out on a panel made of tempered or laminated glass, for example a side window 36 of the motor vehicle C.

After the motor vehicle C has been placed in the preparation area and the cleaning step has been carried out, the base body 12 is arranged in proximity of the motor vehicle C by positioning the head 26 in contact with a preselected region of the outer surface of the window 36 by adjusting the position of the rods 20 and 22 of the articulated arm 18 and locking the rods 20 and 22 and the head 26 in position by means of the adjustable locking means associated with the relative articulations.

The operator carries out a procedure for its own authentication, wholly similar to that described above with reference to the marking of the optical unit 34, and applies a screen of reflective material 38 for the laser beam, for example a plate of metallic material or the like, in contact with the inner surface of the window 36 at the area to be marked.

After starting the electronic control unit 30 to select the type of element selected for marking, in this case a side window 36, a software is automatically activated in the head 26 which performs a step of adjusting the wavelength of the laser beam, its intensity and the number of passes required for marking, specific to the type of the selected element.

The marking operation is then started which involves the delivery of a laser beam by the laser emission head 26, which is maintained in a fixed position toward the window 36 which is crossed by the laser beam to be reflected back toward the window 36 by the screen 38 of reflective material.

Also in this case, the delivery of the laser beam is automatically interrupted at the end of the marking operation and, if there is a symmetrical transparent element to be marked on the other side of the vehicle, the electronic control unit 30 will issue a message in which it is proposed or required to proceed with marking of the symmetrical transparent element.

A similar process is carried out for marking other glass panels of the motor vehicle C, such as the other windows or a front windscreen or a rear window of the motor vehicle C, with possible small variations within the reach of the person skilled in the art.

The marking performed on a glass panel preferably consists of a seven-character alphanumeric code whose impressions 42 extend from the inner surface of the glass panel or window glass 36 in contact with the reflective screen 38 for a depth of about 2 tenths of a millimeter, in this case with removal of material.

The characters of the alphanumeric code of marking may comprise two initial letters (for example "NX") followed by five numeric characters, which code is then combined with the relevant motor vehicle and its owner, or seven numeric characters which correspond to the last seven digits of the chassis number of the motor vehicle.

According to another embodiment of the invention not shown in the drawings, the base body for supporting the laser emission head is a stationary base body, for example consisting of a support such as a tripod capable of being brought from time to time to the most suitable position for carrying out the step of marking a transparent element of the vehicle, or fixedly positioned so that the vehicle is moved with the transparent element to be marked from time to time in the vicinity of the stationary base body. In this case, the electronic control unit can be supported by the stationary base body or placed at a distance therefrom and operatively connected to the laser emission head by means known per se.

According to another embodiment of the invention, not shown in the drawings, the laser emission head is without a dedicated support and can be supported by an operator by means of support means, for example consisting of a shoulder strap in order to keep the laser emission head in a stable position in contact with the transparent element to be marked during the marking operation, the electronic control unit being placed at a distance and being operatively connected to the laser emission head by means of communication means, for example of the Bluetooth type, or by cable connection.

## Claims

1. Process for marking a transparent element of a vehicle, achievable by means of a marking device (10) which comprises:
- an emission head (26) of the YAG-aWave type for emitting an infrared ray laser beam, and
- an electronic control unit (30) operatively connected to the laser emission head (26) to control the emission of said laser beam in order to mark said transparent element (34, 36),
said process comprising the steps of:
- placing the vehicle (C) in a prepared preparation area;
- positioning the laser emission head (26) in contact with a preselected marking region of said transparent element (34, 36); and
- carrying out the marking operation by delivering a laser beam from the laser emission head (26) towards said transparent element (34, 36);
**characterized in that** the process includes the steps of:
- cleaning the outer surface of the element to be marked (34, 36);
- carrying out an authentication procedure of the operator through instructions displayed on the electronic control unit (30) and starting the electronic control unit (30) to select on it the type of element to be marked (34, 36), with the purpose of automatically activating a software in the laser emission head (26) for adjusting the wave length, the intensity and the number of passes of the laser beam for the type of selected element (34, 36);
- carrying out the marking operation by delivering a laser beam from the laser emission head (26) towards said transparent element (34, 36) keeping the position of the laser emission head (26) fixed with respect to the element to be marked (34, 36); and
- waiting for the automatic interruption of the laser beam delivery at the end of the marking operation.

2. Marking process according to claim 1, **characterized in that** it comprises the step of supporting the laser emission head (26) by a support (12) at least during the execution of a marking of said transparent element (34, 36).

3. Marking process according to claim 1 or 2, **characterized in that** said laser emission head (26) delivers a laser beam substantially only in the horizontal direction and downwardly.

4. Marking process according to claim 2, **characterized in that** said support (12) consists of a stationary base body.

5. Marking process according to claim 2, **characterized in that** said support (12) consists of a base body movable on wheels (14, 16).

6. Marking process according to claim 5, **characterized in that** the base body (12) comprises two pairs of wheels (14, 16), a first pair of wheels (16) being rotatable with respect to a common axis of rotation and provided with braking means, and a second pair of independent casters (14).

7. Marking process according to any one claim 4 to 6, **characterized in that** it comprises the step to provide said base body (12) with an articulated arm (18) to support the laser emission head (26), which articulated arm (18) comprises a first portion (20) and a second portion (22) mutually articulated at a first articulation (24), said first portion of the arm (20) being articulated to the base body (12) at a second articulation and said second portion of the arm (22) being articulated to the laser emission head (26) at a third articulation, each of said articulations being associated with respective adjustable locking means, preferably comprising a tightening knob or the like.

8. Marking process according to any one of claims 4 to 7, **characterized in that** the step of cleaning the outer surface of the element to be marked (34, 36) is performed by using specific products for cleaning the element to be marked supplied with the base body (12).

9. Marking process according to claims 7 or 8, **characterized in that** it comprises the steps of:
- arranging the base body (12) of the marking device (10) close to the transparent element to be marked (34, 36) of the vehicle (C);
- adjusting the position of the articulated arm (18) and locking its position by means of said adjustable locking means associated with the articulations of said arm (18).

10. Marking process according to any one of claims 2 to 9, **characterized in that** said marking consists of an alphanumeric code, preferably of seven characters.

11. Marking process according to any one of claims 4 to 10, **characterized in that** it comprises the step of preparing anchoring means for the electronic control unit (30) on said base body (12) and to fix the electronic control unit (30) on the base body (12) by said anchoring means.

12. Marking process according to any one of claims 1 to 11, **characterized in that** it comprises the step of connecting remotely said electronic control unit (30) to a data-base containing a storage of the marking operations performed previously and the codes usable for future marking operations.

13. Marking process according to any one of claims 1 to 12, **characterized in that** it comprises the step of equipping the laser emission head (26) with a software for managing its own operation, and the step of providing said electronic control unit (30) with a resident software communicating via LAN with the software managing the operation of the laser emission head (26).

14. Marking process according to any one of claims 1 to 13, **characterized in that** the electronic control unit (30) asks the operator at the end of the marking operation to position the laser emission head (26) at another element to be marked of the vehicle (C).

15. Marking process according to any one of claims 1 to 14, **characterized in that** the electronic control unit (30) comprises a list of a plurality of transparent elements to be marked and, for each of them, the indication of a wave length, of an intensity and of a number of passes of the laser beam to control the operation of the laser emission head (26) during the marking operation.

16. Marking process according to any one of claims 1 to 15, **characterized in that** said operator authentication procedure comprises at least one or more of the following operations:
- declaring an identifier of the operator, such as his name or an identification code,
- declaring an operator authorization code,
- approving a release of liability from the operator,
- approving a declaration of diligent use and of compliance with safety standards by the operator, and/or
- confirming that the transparent element to be marked (34, 36) corresponds to the element indicated by the operator.

17. Marking process according to any one of claims 1 to 16, wherein the transparent element to be marked is a polycarbonate element such as a front (34) or rear light assembly of the vehicle (C) or the transparent portion of a cowl of a motorcycle, **characterized in that** the laser emission head (26) is arranged at the surface placed outside the vehicle (C) of said transparent element to be marked (34), and **in that** the marking, starting from the contact outer surface, extends for a depth of about 4/5 of the thickness of said polycarbonate element (34), without removal of material.

18. Marking process according to any one of claims 1 to 16, wherein the element to be marked is a glass panel (36) of the vehicle (C), such as a windshield, a rear window or a side window of the vehicle, **characterized in that** the laser emission head (26) is arranged at the surface placed outside the vehicle (C) of said element to be marked (36), being arranged in contact with the inner surface of the glass panel (36) a screen of reflective material (38) for said laser beam, and **in that** the marking, starting from the inner contact surface of the screen of reflective material (38), extends for a depth of about 2 tenths of millimeter starting from the inner surface of said glass panel (36), with removal of material.

## Patentansprüche

1. Verfahren zum Markieren eines transparenten Bauteils eines Fahrzeugs, realisiert durch eine Markiervorrichtung (10), umfassend:
- einen Emissionskopf (26) des YAG-aWave-Typs zur Emission eines Infrarotlaserstrahls, und
- eine elektronische Steuereinheit (30), mit dem Laseremissionskopf (26) operativ verbunden, um die Emission des Laserstrahls zum Markieren des transparenten Bauteils (34, 36) zu steuern,
wobei das Verfahren umfasst die folgenden Schritte:
- Platzieren des Fahrzeugs (C) in einem vorbereiteten Vorbereitungsbereich;
- Positionieren des Laseremissionskopfs (26) in Kontakt mit einem vordefinierten Markierbereich des transparenten Bauteils (34, 36); und
- Durchführen des Markiervorgangs durch Emission eines Laserstrahls vom Laseremissionskopf (26) zum transparenten Bauteil (34, 36);
wobei das Verfahren ist **dadurch gekennzeichnet, dass** es die Schritte umfasst:
- Reinigen der Außenfläche des zu markierenden Bauteils (34, 36) ;
- Durchführen einer Bedienerauthentifizierung gemäß den auf der elektronischen Steuereinheit (30) gezeigten Anweisungen und Starten der Steuereinheit (30), um den Typ des zu markierenden Elements (34, 36) auszuwählen, mit dem Ziel, eine Software im Laseremissionskopf (26) automatisch zu aktivieren, um Wellenlänge, Intensität und Anzahl der Durchgänge des Laserstrahls für den ausgewählten Typ des Bauteils (34, 36) anzupassen ;
- Durchführen des Markiervorgangs, indem ein Laserstrahl vom Laseremissionskopf (26) zum transparenten Bauteil (34, 36) gerichtet wird und dabei die Position des Laseremissionskopfes (26) relativ zum zu markierenden Bauteil (34, 36) beibehalten wird ;
- Warten auf die automatische Beendigung der Laserstrahlemission nach Abschluss des Markierungsvorgangs.

2. Markierungsverfahren nach Anspruch 1, **dadurch gekennzeichnet, dass** es den Schritt des Abstützens des Laseremissionskopfes (26) mittels mindestens einer Halterung (12) während der Durchführung einer Markierung des transparenten Elements (34, 36) umfasst.

3. Markierungsverfahren nach Anspruch 1 oder 2, **dadurch gekennzeichnet, dass** der Laseremissionskopf (26) einen Laserstrahl im Wesentlichen nur horizontal und nach unten aussendet.

4. Markierungsverfahren nach Anspruch 2, **dadurch gekennzeichnet, dass** die Halterung (12) aus einem festen Grundkörper (12) besteht.

5. Markierungsverfahren nach Anspruch 2, **dadurch gekennzeichnet, dass** die Halterung (12) aus einem auf Räder (14, 16) beweglichen Grundkörper besteht.

6. Markierungsverfahren nach Anspruch 5, **dadurch gekennzeichnet, dass** der Grundkörper (12) zwei Paare Räder (14, 16) umfasst, wobei ein erstes Paar Räder (16) um eine gemeinsame Drehachse drehbar und mit Bremsmittel ausgestattet ist, und ein zweites Paar unabhängiger kleinen Räder (14) vorhanden ist.

7. Markierungsverfahren nach einem der Ansprüche 4 bis 6, **dadurch gekennzeichnet, dass** es den Schritt des Versehens des Grundkörpers (12) mit einem Gelenkarm (18) zum Stützen des Laseremissionskopfes (26) umfasst, wobei der Gelenkarm (18) einen ersten Teil (20) und einen zweiten Teil (22) aufweist, die in der Nähe eines ersten Gelenks (24) miteinander verbunden sind, wobei der erste Teil des Arms (20) in der Nähe eines zweiten Gelenks mit dem Grundkörper (12) verbunden ist und der zweite Teil des Arms (22) in der Nähe eines dritten Gelenks mit dem Laseremissionskopf (26) verbunden ist, wobei jedes dieser Gelenke mit jeweiligen einstellbaren Verriegelungsmitteln, vorzugsweise einem Feststellknopf oder Ähnlichem, versehen ist.

8. Markierungsverfahren nach einem der Ansprüche 4 bis 7, **dadurch gekennzeichnet, dass** der Reinigungsschritt der Außenfläche des zu markierenden Bauteils (34, 36) mit speziellen, dem Grundkörper (12) beigefügten Reinigungsmitteln für das zu markierende Bauteil durchgeführt wird.

9. Markierungsverfahren nach Anspruch 7 oder 8, **dadurch gekennzeichnet, dass** es die Schritte umfasst:
- Positionieren des Grundkörpers (12) der Markierungsvorrichtung (10) in der Nähe des zu markierenden transparenten Bauteils (34, 36) des Fahrzeugs (C);
- Einstellen der Position des Gelenkarms (18) und Blockieren seiner Position mittels der mit den Gelenken des Arms (12) verbundenen einstellbaren Blockierungsmittel.

10. Markierungsverfahren nach einem der Ansprüche 2 bis 9, **dadurch gekennzeichnet, dass** die Markierung aus einem alphanumerischen Code, vorzugsweise von sieben Zeichen.

11. Markierungsverfahren nach einem der Ansprüche 4 bis 10, **dadurch gekennzeichnet, dass** es den Schritt des Vorbereitens von Verankerungsmitteln für die elektronische Steuereinheit (30) auf dem Grundkörper (12) und des Befestigens der elektronischen Steuereinheit (30) auf dem Grundkörper (12) mittels dieser Verankerungsmittel umfasst.

12. Markierungsverfahren nach einem der Ansprüche 1 bis 11, **dadurch gekennzeichnet, dass** es den Schritt des Fernverbindens der elektronischen Steuereinheit (30) mit einer Datenbank umfasst, die einen Speicher für zuvor durchgeführte Markierungsvorgänge und die für zukünftige Markierungsvorgänge verwendbaren Codes enthält.

13. Markierungsverfahren nach einem der Ansprüche 1 bis 12, **dadurch gekennzeichnet, dass** es die Schritte umfasst: Ausstatten des Laserstrahlkopfes (26) mit einer Software zur Steuerung seines Betriebs und Bereitstellen der elektronischen Steuereinheit (30) mit einer residenten Software, die über LAN mit der Software zur Steuerung des Laserstrahlkopfes (26) kommuniziert.

14. Markierungsverfahren nach einem der Ansprüche 1 bis 13, **dadurch gekennzeichnet, dass** die elektronische Steuereinheit (30) den Bediener nach Abschluss des Markierungsvorgangs auffordert, den Laserstrahlkopf (26) in der Nähe eines anderen zu markierenden Bauteil des Fahrzeugs (C) zu positionieren.

15. Markierungsverfahren nach einem der Ansprüche 1 bis 14, **dadurch gekennzeichnet, dass** die elektronische Steuereinheit (30) eine Liste mehrerer zu markierender transparenter Bauteile sowie für jeden dieser Bauteile die Angabe einer Wellenlänge, einer Intensität und einer Anzahl der Durchgänge des Laserstrahls zur Steuerung des Laserstrahlkopfes (26) während des Markierungsvorgangs enthält.

16. Markierungsverfahren nach einem der Ansprüche 1 bis 15, **dadurch gekennzeichnet, dass** das Bedienerauthentifizierungsverfahren mindestens einen oder mehrere der folgenden Schritte umfasst:
- Angabe einer Bedienerkennung, wie seines Namens oder einer Identifikationscode,
- Angabe eines Bedienerautorisierungscodes,
- Genehmigung eines Haftungsausschlusses des Bedieners,
- Genehmigung einer Erklärung des Bedieners über die sorgfältige Verwendung und die Einhaltung der Sicherheitsstandards und/oder
- Bestätigung, dass der zu markierende transparente Bauteil (34, 36) dem vom Bediener angegebenen Bauteil entspricht.

17. Markierungsverfahren nach einem der Ansprüche 1 bis 16, wobei es sich bei dem zu markierenden transparenten Bauteil um ein Polycarbonat-Bauteil wie eine Front- (14) oder Rücklichteinheit des Fahrzeugs (C) oder den transparenten Teil einer Motorradhaube handelt, **dadurch gekennzeichnet, dass** der Laseremissionskopf (26) nahe der Oberfläche des zu markierenden transparenten Bauteils (14) an der Außenseite des Fahrzeugs (C) angeordnet ist und die Markierung, ausgehend von der äußeren Kontaktfläche, sich ohne Materialabtrag bis zu einer Tiefe von etwa 4/5 der Dicke des Polycarbonat-Bauteils (14) erstreckt.

18. Markierungsverfahren nach einem der Ansprüche 1 bis 16, wobei es sich bei dem zu markierenden Bauteil um eine Glasscheibe (36) des Fahrzeugs (C), wie eine Windschutzscheibe, eine Heckscheibe oder eine Seitenscheibe, handelt, **dadurch gekennzeichnet, dass** der Laseremissionskopf (26) nahe der außerhalb des Fahrzeugs (C) liegenden Oberfläche des zu markierenden Bauteils (36) angeordnet ist, ein Schirm aus reflektierendem Material (38) in Kontakt mit der Innenfläche der Glasscheibe (36) für den Laserstrahl angebracht ist und die Markierung sich von der inneren Kontaktfläche des Schirms aus reflektierendem Material (38) bis zu einer Tiefe von etwa 2 Zehntel Millimetern von der Innenfläche der Glasscheibe (36) erstreckt, wobei Material abgetragen wird.

## Revendications

1. Procédé de marquage d'un élément transparent d'un véhicule, obtenu par un dispositif de marquage (101) qui comprend :
- une tête d'émission (26) du type YAG-aWawe pour émettre un faisceau de rayons laser infrarouges, et
- une unité de commande électronique (30) reliée en opération à la tête d'émission laser (26) pour commander l'émission dudit faisceau laser afin de marquer ledit élément transparent (34, 36),
ledit procédé comprenant les étapes de :
- placer le véhicule (C) dans une zone de préparation préparée ;
- positionner la tête d'émission laser (26) en contact avec une zone de marquage présélectionnée dudit élément transparent (34, 36) ; et
- mettre en œuvre l'opération de marquage par émission d'un faisceau laser de la tête d'émission laser (26) vers ledit élément transparent (34, 36) ;
**caractérisé en ce que** le procédé comprend les étapes de :
- nettoyer la surface extérieure de l'élément à marquer (34, 36) ;
- mettre en œuvre une procédure d'authentification de l'opérateur par des instructions affichées sur l'unité de commande électronique (30) et démarrer l'unité de commande électronique (30) pour sélectionner sur celle-ci le type d'élément à marquer (34, 36), afin d'activer automatiquement un logiciel dans la tête d'émission laser (26) pour régler la longueur d'onde, l'intensité et le nombre de passages du faisceau laser pour le type d'élément sélectionné (34, 36) ;
- mettre en œuvre l'opération de marquage par émission d'un faisceau laser de la tête d'émission laser (26) vers ledit élément transparent (34, 36) en maintenant la position de la tête d'émission laser (26) fixée par rapport à l'élément à marquer (34, 36) , et
- attendre l'interruption automatique de l'émission du faisceau laser à la fin de l'opération de marquage.

2. Procédé de marquage selon la revendication 1, **caractérisé en ce qu'**il comprend l'étape de supporter la tête d'émission laser (26) par un support (12) au moins pendant l'exécution d'un marquage dudit élément transparent (34, 36).

3. Procédé de marquage selon la revendication 1 ou 2, **caractérisé en ce que** ladite tête d'émission laser (26) émet un faisceau laser sensiblement seulement dans la direction horizontale et vers le bas.

4. Procédé de marquage selon la revendication 2, **caractérisé en ce que** ledit support (12) est constitué d'un corps de base stationnaire (12).

5. Procédé de marquage selon la revendication 2, **caractérisé en ce que** ledit support (12) est constitué d'un corps de base mobile sur roues (14, 16).

6. Procédé de marquage selon la revendication 5, **caractérisé en ce que** le corps de base (12) comprend deux paires de roues (14, 16), une première paire de roues (16) étant rotative par rapport à un axe de rotation commun et munie de moyens de freinage, et une deuxième paire de roulettes indépendantes (14).

7. Procédé de marquage selon l'une quelconque des revendications 4 à 6, **caractérisé en ce qu'**il comprend l'étape de fournir ledit corps de base (12) avec un bras articulé (18) pour supporter la tête d'mission laser (26), le bras articulé (18) comprenant une première partie (20) et une deuxième partie (22) mutuellement articulées près d'une première articulation (24), ladite première partie du bras (20) étant articulée au corps de base (12) près d'une deuxième articulation et ladite deuxième partie du bras (22) étant articulée à la tête d'émission laser (26) près d'une troisième articulation, chacune desdites articulations étant associées avec des respectifs moyens de blocage réglables, de préférence comprenant un bouton de serrage ou similaire,

8. Procédé de marquage selon l'une quelconque des revendications 4 à 7, **caractérisé en ce que** l'étape de nettoyage de la surface extérieure de l'élément à marquer (34, 36) est effectuée en utilisant des produits spécifiques pour nettoyer l'élément à marquer fourni avec le corps de base (12).

9. Procédé de marquage selon les revendications 7 ou 8, **caractérisé en ce qu'**il comprend les étapes de :
- positionner le corps de base (12) du dispositif de marquage (10) près de l'élément transparent à marquer (34, 36) du véhicule (C) ;
- régler la position du bras articulé (18) et bloquer sa position par lesdits moyens de blocage réglables associés avec les articulations dudit bras (12).

10. Procédé de marquage selon l'une quelconque des revendications 2 à 9, **caractérisé en ce que** ledit marquage est constitué d'un code alphanumérique, de préférence de sept caractères.

11. Procédé de marquage selon l'une quelconque des revendications 4 à 10, **caractérisé en ce qu'**il comprend l'étape de préparer des moyens d'ancrage pour l'unité de commande électronique (30) sur ledit corps de base (12) et pour fixer l'unité de commande électronique (30) sur le corps de base (12) par lesdits moyens d'ancrage.

12. Procédé de marquage selon l'une quelconque des revendications 1 à 11, **caractérisé en ce qu'**il comprend l'étape de connexion à distance de ladite unité de commande électronique (30) à une base de données contenant un stockage des opérations de marquage effectuées précédemment et les codes utilisables pour des opérations de marquage futures.

13. Procédé de marquage selon l'une quelconque des revendications 1 à 12, **caractérisé en ce qu'**il comprend l'étape d'équiper la tête d'émission laser (26) avec un logiciel pour la gestion de son propre fonctionnement, et l'étape de fournir ladite unité de commande électronique (30) avec un logiciel résident communiquant via LAN avec le logiciel de gestion du fonctionnement de la tête d'émission laser (26).

14. Procédé de marquage selon l'une quelconque des revendications 1 à 13, **caractérisé en ce que** l'unité de commande électronique (30) demande à l'opérateur à la fin de l'opération de marquage de positionner la tête d'émission laser (26) près d'un autre élément à marquer du véhicule (C).

15. Procédé de marquage selon l'une quelconque des revendications 1 à 14, **caractérisé en ce que** l'unité de commande électronique (30) comprend une liste d'une pluralité d'éléments transparents à marquer et, pour chacun de ceux-ci, l'indication d'une longueur d'onde, d'une intensité et d'un nombre de passages du faisceau laser pour commander le fonctionnement de la tête d'émission laser (26) pendant l'opération de marquage.

16. Procédé de marquage selon l'une quelconque des revendications 1 à 15, **caractérisé en ce que** la dite procédure d'authentification de l'opérateur comprend au moins une ou plusieurs des étapes suivantes :
- déclarer un identificateur de l'opérateur, comme son nom ou un code d'identification,
- déclarer un code d'autorisation de l'opérateur,
- approuver un décharge de responsabilité de l'opérateur,
- approuver une déclaration d'utilisation diligente et de conformité avec des normes de sécurité par l'opérateur, et/ou
- confirmer que l'élément transparent à marquer (34, 36) correspond à l'élément indiqué par l'opérateur.

17. Procédé de marquage selon l'une quelconque des revendications 1 à 16, dans lequel l'élément transparent à marquer est un élément en polycarbonate comme un ensemble lumineux avant (14) ou arrière du véhicule (C) ou la partie transparente d'un capot de moto, **caractérisé en ce que** la tête d'émission laser (26) est disposée près de la surface placée à l'extérieur du véhicule (C) dudit élément transparent à marquer (34), et que le marquage, à partir de la surface de contact extérieure, s'étend pour une profondeur de 4/5 environ de l'épaisseur dudit élément en polycarbonate (34), sans enlèvement de matière.

18. Procédé de marquage selon l'une quelconque des revendications 1 à 16, dans lequel l'élément à marquer est un panneau de verre (36) du véhicule (C), tel qu'un pare-brise, une lunette arrière ou une vitre latérale du véhicule, **caractérisé en ce que** la tête d'émission laser (26) est disposée près de la surface placée à l'extérieur du véhicule (C) dudit élément à marquer (36), étant installé en contact avec la surface interne du panneau de verre (36) un écran d'un matériau réflectif (38) pour ledit faisceau laser, et **en ce que** le marquage, à partir de la surface de contact interne de l'écran en matériau réflectif (38) s'étend pour une profondeur de 2 dixièmes de millimètres environ, à partir de la surface interne dudit panneau de verre (36), avec enlèvement de matière.
